# EUROPEAN PATENT SPECIFICATION

(11) **EP 1 448 485 B1**
(45) Date of publication and mention of the grant of the patent: **03.01.2007**
(21) Application number: 02801223.5
(22) Date of filing: 08.10.2002
(51) Int. Cl.: C03B 23/025, A47B 13/02, A47B 7/00, A47B 13/12

(54) **TABLE BASE AND METHOD FOR MAKING THE SAME**
TISCHUNTERGESTELL UND HERSTELLUNGSVERFAHREN DAFÜR
BASE DE TABLE ET SON PROCEDE DE FABRICATION

(30) Priority: 19.10.2001 AU 2001008392
(43) Date of publication of application: 25.08.2004
(73) Proprietor: Sydney Glass Pty Ltd., Bankstown, NSW 2200 (AU)
(72) Inventor: OBERG, Ted, Bankstown, NSW 2200 (AU)
(74) Representative: Pratt, David Martin
(86) International application number: PCT/AU2002/001366
(87) International publication number: WO 2003/033421

(56) References cited:
- AU-B- 101 964
- AU-B- 101 965
- US-B- 6 257 022

## Description

### Field of the Invention

This invention relates to a table base and to a method of making a table base or similar structure by glass slumping.

### Background of the Invention

It is known to slump glass by placing a sheet of glass on top of a mould in a kiln, and heating the glass so that the sheet of glass loses its rigidity and softens and slumps over the mould, thus acquiring the shape of the mould. It is known to make a number of different glass objects using this method, such as small coffee tables and the like. US 6257022 discloses a method of making a lamp shade by a glass slumping method. However, design reasons and the limitations of the existing slumping methods place limitations on this process and it is not currently possible for example, to satisfactorily manufacture large all glass tables such as dining tables using this method, because using glass slumping, the legs for supporting a table tend to extend around and depend from the perimeter of the table top and this prevents the design of a satisfactory table having enough leg room for satisfactory use.

Any discussion of documents, acts, materials, devices, articles or the like which has been included in the present specification is solely for the purpose of providing a context for the present invention. It is not to be taken as an admission that any or all of these matters form part of the prior art base or were common general knowledge in the field relevant to the present invention as it existed in Australia before the priority date of each claim of this application.

### Summary of the Invention

In a first aspect of the present invention there is provided a method of slumping glass comprising the steps of:
providing a mould for use in a glass slumping process, the mould defining a central portion which is typically generally planar, and a series of legs depending down from the central portion, the mould being characterised by a series of members extending upwardly relative to the central portion, the method being further characterised by the step of placing a sheet of glass cut to a generally flower or corolla shape defining petals on top of the mould with parts of some of the petals of the sheet of glass resting on upper portions of the upwardly extending members and other petals located above the legs of the mould; and
heating the mould and the glass to cause the sheet of glass to slump and approximate to the shape of the mould.

In a preferred embodiment, the resultant slumped glass structure is then chemically toughened by heating it in a salt bath at high temperatures for a number of hours, typically thirty hours.

The present invention also provides a base formed from a single sheet of glass for a table comprising:
a series of downwardly depending legs;
a central portion;
a series of upwardly extending arms adapted to receive a sheet of glass or the like resting thereon.

An all glass table can then be formed by placing a glass table top on top of the upper (distal) ends of the arms.

### Brief Description of the Drawings

A specific embodiment of the invention will now be described by way of example only, and with reference to the accompanying drawings in which:
Figure 1 is a perspective view of a flat sheet of glass cut into a flower pattern resting on top of a mould before slumping;
Figure 2 is a plan view of the mould and glass shown in Figure 1;
Figure 3 is a perspective view of the glass shown in Figure 1 after the glass has been slumped to the shape of the mould; and
Figure 4 shows the slumped sheet of glass of Figure 3 separated from the mould.

### Detailed Description of Preferred Embodiment

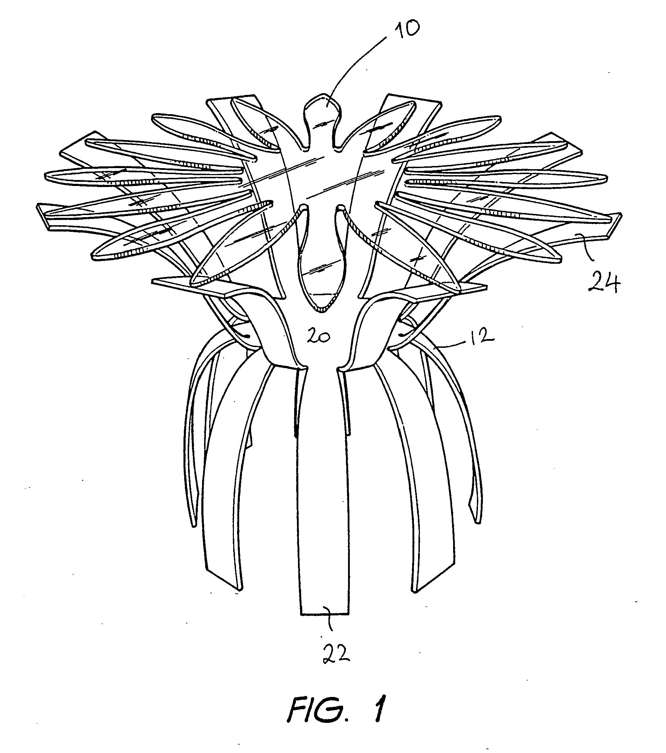

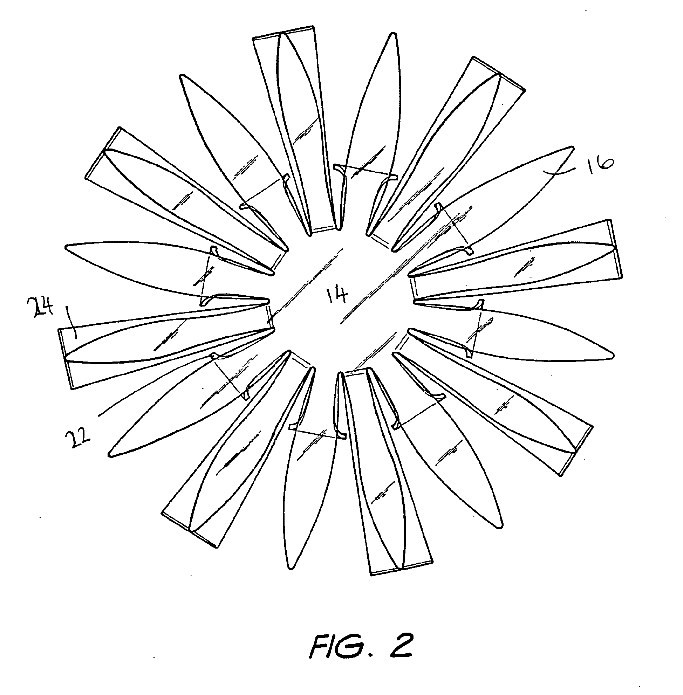

Referring to the drawings, Figure **1** shows a perspective view of a sheet of glass 10 resting on top of a mould 12. As can be seen in both Figures 1 and 2, a sheet of glass has been cut into a flower pattern or corolla using a water jet to define a central portion 14 and a series of sixteen petals 16 extending away from the central portion. The tips of the petals are pointed, although the shape and number of petals may be changed from that illustrated.

The sheet of glass 10 rests on a mould which is typically made of steel. As is best shown in Figure 1, the mould defines a central portion 20 supported by a series of eight spaced apart depending generally curved legs 22. Between each pair of depending legs, there is a generally S-shaped upwardly extending arm portion 24 each portion defining a convex and a concave portion.

As shown in Figure 1, the tips of every second petal 16 rests on the end of one of the arm portions 24 with the remaining petals being unsupported and resting in mid-air above one of the depending leg portions 22.

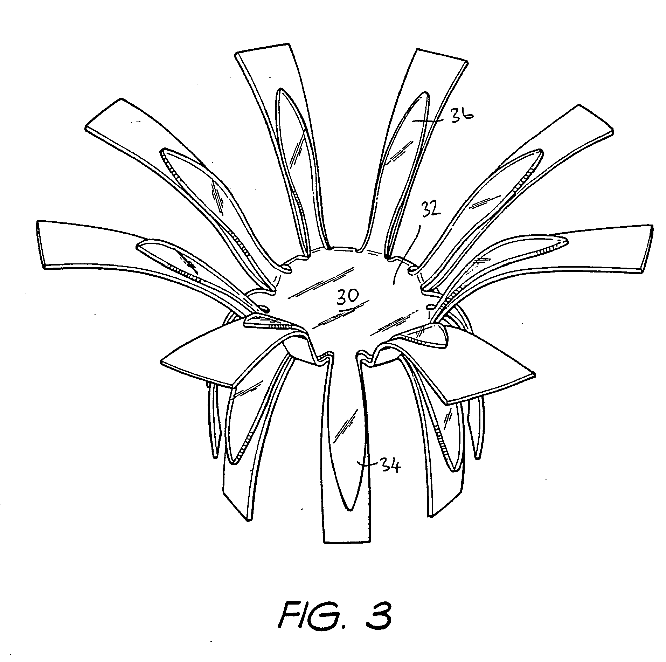

When the assembly is placed in a kiln and the temperature raised to about 600 to 700 degrees Centigrade, the glass sheet softens, slumps to form a structure 28 which approximates to the shape of the mould as illustrated in Figure 3. The top part of the mould captures every second petal and the other petals drop through the gaps between the arm portions 24 and acquire the shape of the depending leg portions 22 disposed between the upstanding arm portions 24. The resultant glass structure 30 has a central area 32, a series of eight depending legs 34 and a series of eight upstanding arms 36.

Thus, the present invention enables the provision of glass structures in which sheets of glass appear to be slumped in two different opposed directions at once which the skilled person in the art would ordinarily think would not be possible.

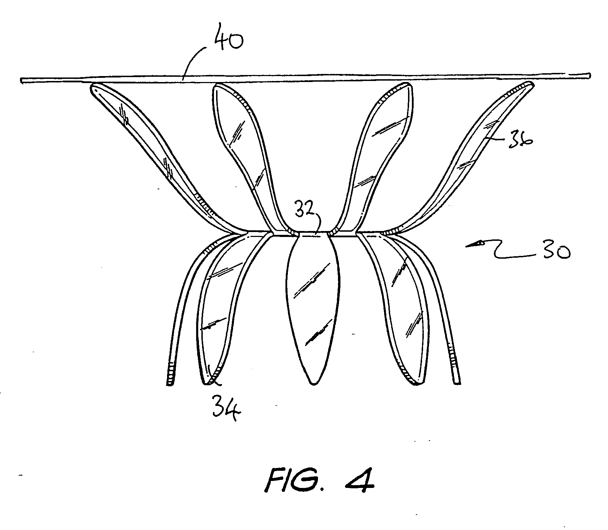

Figure 4 shows the cooled slumped glass structure 28 removed from the mould and used to support a circular glass top 40 thereby forming an all glass table which, by using the slumped glass form as a support, can provide sufficient leg room to users for the table to be satisfactorily used as a dining table or the like.

The slumped glass form is thermally toughened to strengthen the glass by standing in a salt bath for typically around thirty hours. Such glass toughening techniques are well known in the art. Australian patents No 101964 and 101965 to Corning Glass Works disclose glass toughening methods. The particular toughening method used is not critical to the invention.

It will be clear to the person skilled in the art that a table support or structure having fewer or greater number of legs and arms than those shown in the drawings, is possible. It would also be clear to the person skilled in the art that it is not necessary for the table to have as many arms as legs and that the table base can be made relatively larger or smaller without deviating from the principals of the present invention.

It will be appreciated by persons skilled in the art that numerous variations and/or modifications may be made to the invention as shown in the specific embodiments without departing from the scope of the invention as defined in the apended claims. The present embodiments are, therefore, to be considered in all respects as illustrative and not restrictive.

## Claims

1. A method of slumping glass comprising the steps of:
providing a mould (12) for use in a glass slumping process, the mould defining a central portion (20), and a series of legs (22) depending down from the central portion, the mould being **characterised by** a series of members (24) extending upwardly relative to the central portion (20), the method being further **characterised by** the step of placing a sheet of glass (10) cut to a generally flower or corolla shape defining petals (16) on top of the mould with parts of some of the petals of the sheet of glass resting on upper portions of the upwardly extending members (24) and other petals located above the legs (22) of the mould (12); and
heating the glass to cause the sheet of glass to slump and approximate to the shape of the mould.

2. A method of slumping glass as claimed in claim 1 wherein the mould defines at least six legs (22) and six upwardly extending members (24).

3. A method of slumping glass as claimed in claim 1 or claim 2 wherein the upwardly extending members (24) are generally S shaped defining a convex and a concave portion.

4. A method of slumping glass as claimed in any preceding claim wherein the central portion (20) of the mould (12) is generally planar.

5. A method of slumping glass as claimed in any preceding claim wherein the resultant slumped glass structure is chemically toughened by heating it in a salt bath at high temperatures for a number of hours.

6. A glass table base (30) formed from a single sheet of glass for a table by a method as claimed in any one of claims 1 to 5, the table base comprising:
a series of downwardly depending legs (34);
a central portion (32); and
a series of generally upwardly extending arms (36) defining ends distal from the central portion.

7. A table comprising a table base as claimed in claim 6 and a glass top (40) resting on upper portions of the arms (30) of the table base (30).

## Patentansprüche

1. Glasabsackverfahren mit den Schritten:
Vorsehen einer Form (12) zur Verwendung bei einem
Glasabsackvorgang, wobei die Form einen zentralen Bereich (20) und
eine Reihe von sich vom zentralen Bereich aus nach unten erstreckenden Schenkeln (22) aufweist, wobei die Form durch eine Reihe von sich relativ zum zentralen Bereich (20) nach oben erstreckenden Elementen (24) **gekennzeichnet** ist, wobei das Verfahren des Weiteren **gekennzeichnet ist durch** den Schritt des Absetzens einer Glasscheibe (10) auf der Oberseite der Form, wobei die Glasscheibe zu einer im Allgemeinen Blumen- oder Blumenkronengestalt zugeschnitten ist, die Blütenblätter (16) aufweist, wobei Teile einiger der Blütenblätter der Glasscheibe auf den oberen Bereichen der sich nach oben erstreckenden Elemente (24) aufliegen und andere Blütenblätter sich oberhalb der Schenkel (22) der Form (12) befinden; und
Erhitzen des Glases, damit die Glasscheibe absackt und sich der Gestalt der Form annähert.

2. Glasabsackverfahren nach Anspruch 1, wobei die Form mindestens sechs Schenkel (22) und sechs sich nach oben erstreckende Elemente (24) aufweist.

3. Glasabsackverfahren nach Anspruch 1 oder Anspruch 2, wobei die sich nach oben erstreckenden Elemente (24) im Allgemeinen S-förmig gestaltet sind, wobei sie einen konvexen und einen konkaven Bereich bilden.

4. Glasabsackverfahren nach einem der vorhergehenden Ansprüche, wobei der zentrale Bereich (20) der Form (12) im Allgemeinen planar ist.

5. Glasabsackverfahren nach einem der vorhergehenden Ansprüche, wobei die sich ergebende abgesackte Glasstruktur durch ihr Erhitzen in einem Salzbad bei hohen Temperaturen während einiger Stunden chemisch gehärtet wird.

6. Glastischgestell (30), das aus einer einzigen Glasscheibe für einen Tisch mittels eines Verfahrens nach einem der Ansprüche 1 bis 5 hergestellt ist, wobei das Tischgestell aufweist:
eine Reihe von sich nach unten erstreckenden Beinen (34),
einen zentralen Bereich (32) und
eine Reihe von sich im Allgemeinen nach oben erstreckenden Armen (36), die distal vom zentralen Bereich Enden bilden.

7. Tisch mit einem Tischgestell nach Anspruch 6 und einem gläsernen Oberteil (40), das auf den oberen Bereichen der Arme (36) des Tischgestells (30) aufliegt.

## Revendications

1. Procédé d'affaissement du verre comprenant les étapes consistant à :
proposer un moule (12) pour être utilisé dans un procédé d'affaissement du verre, le moule définissant une portion centrale (20) et une série de pieds (22) dépendants orientés vers le bas par rapport à la portion centrale, le moule étant **caractérisé par** une série de membrures (24) s'étendant vers le haut par rapport à la portion centrale (20), le procédé **se caractérisant en outre par** l'étape consistant à placer une feuille de verre (10) coupée selon une forme pour l'essentiel de fleur ou de corolle définissant des pétales (16) sur la partie haute du moule avec des parties de certains des pétales de la feuille de verre reposant sur les portions supérieures des membrures (24) s'étendant vers le haut et d'autres pétales disposés au-dessus des pieds (22) du moule (12) ; et
chauffer le verre pour faire que la feuille de verre s'affaisse et approche la forme du moule.

2. Procédé d'affaissement du verre selon la revendication 1 dans lequel le moule définit au moins six pieds (22) et six membrures (24) s'étendant vers le haut.

3. Procédé d'affaissement du verre selon la revendication 1 ou la revendication 2 dans lequel les membrures (24) s'étendant vers le haut ont pour l'essentiel une forme de S définissant une portion convexe et une portion concave.

4. Procédé d'affaissement du verre selon l'une des revendications précédentes dans lequel la portion centrale (20) du moule (12) est généralement planaire.

5. Procédé d'affaissement du verre selon l'une des revendications précédentes dans lequel la structure du verre affaissé résultante est chimiquement durcie en le chauffant dans un bain de sel à haute température pendant un certain nombre d'heures.

6. Embase de table en verre (30) formée d'une unique feuille de verre pour une table par un procédé tel que revendiqué dans l'une des revendications 1 à 5, l'embase de table comprenant :
une série de pieds dépendants orientés vers le bas (34) ;
une portion centrale (32) ; et
une série de bras s'étendant pour l'essentiel vers le haut (36) et définissant des extrémités distales par rapport à la portion centrale.

7. Table comprenant une embase de table selon la revendication 6 et un dessus en verre (40) reposant sur les portions supérieures des bras (36) de l'embase de table (30).
